Europäisches Patentamt

European Patent Office

Office européen des brevets

(19)

(11) Publication number: **0 089 419**

A1

## (12) EUROPEAN PATENT APPLICATION

(21) Application number: 82200353.9

(22) Date of filing: 23.03.82

(51) Int. Cl.³: **G 01 N 9/20**

(43) Date of publication of application:
28.09.83 Bulletin 83/39

(84) Designated Contracting States:
AT BE CH DE FR GB IT LI LU NL SE

(71) Applicant: Van Rietschoten & Houwens
Elektrotechnische Maatschappij B.V.
Sluisjesdijk 155 Postbus 5054
NL-3008 AB Rotterdam(NL)

(72) Inventor: Bolijn, Maarten-Adrianus-Dirk
Buurkamp 8
NL-3085 SG Rotterdam(NL)

(74) Representative: Kooy, Leendert Willem et al,
OCTROOIBUREAU VRIESENDORP & GAADE P.O. Box
266
NL-2501 AW The Hague(NL)

(54) Measuring arrangement for measuring the density of liquids.

(57) The invention relates to a measuring device for measuring the specific weight of liquids, provided with an oblong housing (1) to be immersed in the liquid, a cavity (8) being present lengthways in said housing, which cavity can admit the liquid through openings (4) in the base of the housing, a body (5) provided with a ferromagnetic core (6) and which is freely movable lengthways of said cavity being present within the cavity (8) and a lift-up coil (2) being present in said housing (1) about the cavity (8). The invention particularly relates to the fact that an inductive displacement recorder (3) is placed in the housing (1) about the cavity practically on a level with the ferromagnetic core (6) in the case of a currentless lift-up coil (2), which recorder (3) only emits a signal after placement of the housing (1) in a liquid, if such an increasing direct current is periodically passed through the lift-up coil (2) so that the body (5) with the ferromagnetic core (6) moves lengthways from the raised position from a mechanical stop (7) after initially having raised itself within the liquid lengthways of the cavity (8), the direct current throught the lift-up coil (2) being a measure for the specific weight of the liquid at the moment when the displacement recorder (3) emits a signal.

EP 0 089 419 A1

-1-

MEASURING DEVICE FOR MEASURING THE SPECIFIC WEIGHT OF LIQUIDS

The invention is related to a measuring device for measuring the specific weight of liquids, provided with an oblong housing to be immersed in the liquid, a cavity being present lengthways in said housing, which cavity can admit the liquid through openings in the base of the housing, a body provided with a ferromagnetic core and which is movable lengthways of said cavity being present within the cavity and a lift-up coil being present about the cavity in the housing.

A similar measuring device is known from DE-B 2 803 912, the measurement being carried out with an electric resistance bridge. The disadvantage of this known measuring device is that only conductive liquids can be measured. Moreover there the friction against the wall of the cavity is not removed by the lift-up coil. The circuit is also in direct contact with the liquid, which is very objectionable. An embodiment is indicated there, where no direct contact with the liquid is required, but in the case of very aggresive liquids, such as, for instance, sulfuric acid, the use of a metal spring is extremely unsuitable and an inaccuracy in the measurement is caused by this spring.

The measuring device of the invention of the type mentioned in the introduction removed the above-mentioned objections and is characterized to that end in that an inductive displacement recorder is placed in the housing about the cavity practically on a level with the ferromagnetic core in the case of a currentless lift-up coil, which recorder only emits a signal after placement of the housing in a liquid if such an increasing direct current is periodically passed through the lift-up coil that the body with the ferromagnetic core moves lengthways from the raised position from a mechanical stop after initially having raised itself within the liquid lengthways of the cavity, the direct current through the lift-up coil being a measure for the specific weight of the liquid at the moment when the displacement recorder emits a signal.

In the initial state therefore the lift-up coil is without current and said body is then situated obliquely to the wall of the cavity. A gradually increasing direct current is periodically passed through the lift-up coil, which creates a gradually increasing magnetic field. This produces a gradually increasing force on the core of the body. The magnetic field is at its largest on the centre line of the coil and the core and thus the body with the core will become free from the wall of the cavity and will still only rest on the mechanical stop.

If the current in the lift-up coil becomes greater still, the sum of the magnetic force and the upward force of the liquid will be big enough to raise the body. This movement is perceived by the displacement recorder. The continuous current through the lift-up coil at the moment when the displacement recorder emits a signal is a measure for the specific weight of the liquid.

It will be clear that the device according to the invention cannot only measure a specially conductive liquid but can also be suitable for various kinds of liquids. The friction against the wall of the cavity is also removed because in the first instance the body with the ferromagnetic core rises within the liquid. Furthermore, there are no parts which can be affected by aggressive liquids, such as sulphuric acid in lead accumulators.

The device of the apparatus is particularly suitable for accumulators having a large capacity, e.g. 10,000 Ah with current values of up to 7,000 ampere.

The measuring device of the invention is characterized further in that the average specific weight of the body and the core together is greater than the largest specific weight of the liquid. This is important to prevent the body with core from floating in the liquid.

The measuring device of the invention is characterized further in that the polarity of the direct current through the left-up coil is reversed in two successive measuring cycles. This means that inaccuracies owing to the effect of permanent magnetism in the core of the body are suppressed.

The measuring device of the invention is characterized moreover in that the measured value is averaged over a number of measuring cycles. As a result, not only the effect of permanent magnetism as mentioned above is overcome, but also the effect which can be the result of movements of the liquid.

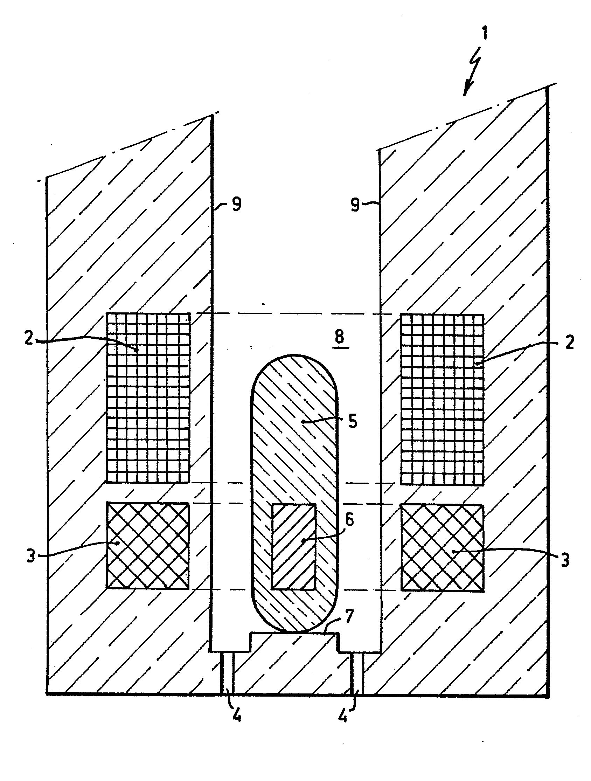

The invention will be shown in more detail below with the aid of the drawing.

The single figure shows an embodiment of the measuring device of the invention.

One can see a housing 1 in the figure, which housing contains a lift-up coil 2, an inductive displacement recorder 3 and a bar shaped body 5 with ferromagnetic core 6. The body 5 with the core 6 is present in a cavity 8 within the body. This cavity is concentric in this embodiment with the periphery of the housing 1. The housing can preferably consist of plastic, like the body 5.

The body 5 is drawn in the figure so as to be at right angles with a mechanical stop 7, which is drawn as an elevation of the base of the cavity 8.

If the body 1 is immersed into the liquid to be measured, this liquid can flow through openings 4 in the base of the housing 1 into the cavity 8 within the housing 1.

The lift-up coil 2 and the inductive displacement recorder 3 are arranged within the material of the housing 1 as windings arranged about the cavity. Direct current is periodically fed to the lift-up coil 2 and the direct current is gradually increased. In the position of rest of the body 5 said body is situated in an oblique position against the wall 9 of the cavity 8 when direct current does not yet pass through the lift-up coil 2. The upward force due to the liquid that has flowed into the cavity 8 is too small to raise the body 5. For, the average specific weight of the body 5 and the core 6 together is slightly larger than the largest specific weight of the liquid.

The gradually increasing direct current through the lift-up coil 2 forms a gradually increasing magnetic field, which exerts a gradually increasing force on the core 6 in the body 5.

The developing magnetic field is the largest in the centre line of the lift-up coil 2, so that the body 5 with the core 6, which have an elongated form, will become free from the wall 9 of the cavity 8, so that the body 5 still only rests on the mechanical stop 7 at the bottom of the cavity 8.

The direct current through the lift-up coil 2 is gradually further increased, which means that at a given moment the upward force of the liquid and the magnetic force at that moment are together large enough to raise the body 5 containing the core 6 from the stop 7.

The inductive displacement recorder 3 can be of a known construction and will only produce an output voltage at its output when the body 5 with the core 6 moves upwards.

It is, of course, important that the core 6 is present as much as possible at the position of the inductive displacement recorder 3, so that an adequate output signal is obtained by means of the inductive displacement recorder 3.

At the moment that the inductive displacement recorder 3 produces an output signal, the direct current through the lift-up coil 2 is determined at that same moment by electronic means. This current through the lift-up coil 2 at the time of movement of the body 5 is a measure now for the specific weight of the liquid.

It will be clear from the above that the body 5 can move freely in the cavity 8 in the housing 1.

The upward movement of the body 5 is therefore preceded here because the body 5 initially raises itself up at the start of the increasing direct current through the lift-up coil 2. The advantage of this is that the body 5 cannot remain adhered to the wall 9 of the cavity during its actual upward movement, which is then detected by the displacement recorder 3.

The direct current is passed periodically through the lift-up coil 2 to carry out a number of measuring cycles. For, effects resulting from movements of the liquid are suppressed with respect to the measurement by averaging over a sufficient number of measuring cycles. This increases the accuracy of the measurement of the specific weight of the liquid.

In order to further suppress inaccuracies which can be the result of permanent magnetisation of the core 6 the polarity or direction of the direct current through the lift-up coil 2 is reversed in the case of two successive measuring cycles. It will be clear that the raising action of the lift-up coil 2 on the core 6 remains the same each time the magnetic force is reversed. The effect of permanent magnetism in the core 6 is then suppressed in the average value of the direct current of successive cycles.

As was already indicated in the beginning, the present invention has the advantage that no metal part whatsoever can come into contact with the liquid to be measured, which is particularly important in the case of measurements of the specific weight of aggressive liquids, as is the case, for example, with sulphuric acid in lead accumulators. Here, particular reference is made to the fact that the ferromagnetic core 6 is placed within the body 5, which, for example, can also consist of plastic. No use is made, further, of a metal spring, as in the discussed known construction, which means that inaccuracies thereof can be avoided.

The reference numbers in the following claims should not have any limited effect on the interpretation of the claims and are only intended as clarification.

-1-

CLAIMS:

1. A measuring device for measuring the specific weight of liquids, provided with an oblong housing (1) to be immersed in the liquid, a cavity (8) being present lengthways in said housing, which cavity can admit the liquid through openings (4) in the base of the housing, a body (5) provided with a ferromagnetic core (6) and which is freely movable lengthways of said cavity being present within the cavity (8) and a lift-up coil (2) being present in said housing (1) about the cavity (8), characterized in that an inductive displacement recorder (3) is placed in the housing (1) about the cavity practically on a level with the ferromagnetic core (6) in the case of a currentless lift-up coil (2), which recorder (3) only emits a signal after placement of the housing (1) in a liquid if such an increasing direct current is periodically passed through the lift-up coil (2) that the body (5) with the ferromagnetic core (6) moves lengthways from the raised position from a mechanical stop (7) after initially having raised itself within the liquid lengthways of the cavity (8), the direct current through the lift-up coil (2) being a measure for the specific weight of the liquid at the moment when the displacement recorder (3) emits a signal.

2. A measuring device according to claim 1, characterized in that the average specific weight of the body (5) and the core (6) together is greater than the largest specific weight of the liquid.

3. A measuring device according to claims 1 or 2, characterized in that the polarity of the direct current through the lift-up coil (2) is reversed in two successive measuring cycles.

4. A measuring device according to claim 3, characterized in that the measured value is averaged over a number of measuring cycles.

5. A device essentially as described in the specification and/or illustrated in the drawing.

ADD/cdw/LvdM

## DOCUMENTS CONSIDERED TO BE RELEVANT

| Category | Citation of document with indication. where appropriate, of relevant passages | Relevant to claim | CLASSIFICATION OF THE APPLICATION (Int. Cl. 3) |
|---|---|---|---|
| | --- | | G 01 N 9/20 |
| Y | JOURNAL OF SCIENTIFIC INSTRUMENTS, vol. 44, no. 5, May 1967, pages 382-384, London (GB); A.L.CLARKE: "Density determinations on small liquid samples". *Page 382, left-hand column, lines 15-39; page 382, right-hand column, line 3 to page 383, left-hand column, line 59; figure 1* | 1 | |
| Y | --- US-A-3 593 585 (E.J.M.BRESSON) *Column 3, lines 2-6; figures 1-2* | 1 | |
| A | --- US-A-3 815 424 (P.E.AEGIDIUS) *Column 9, line 34 to column 10, line 17* | 1,2 | TECHNICAL FIELDS SEARCHED (Int. Cl. 3) |
| A | --- INSTRUMENT PRACTICE, vol. 22, no. 9, September 1968, pages 767-772, London (GB); P.K.SAGE: "Industrial measurement of liquid density". *Page 767, right-hand column, lines 1-2* | 2 | G 01 N 9/00 |
| | --- -/- | | |

The present search report has been drawn up for all claims

| Place of search | Date of completion of the search | Examiner |
|---|---|---|
| THE HAGUE | 11-11-1982 | ANTHONY R.G. |

## DOCUMENTS CONSIDERED TO BE RELEVANT

Page 2

| Category | Citation of document with indication, where appropriate, of relevant passages | Relevant to claim | CLASSIFICATION OF THE APPLICATION (Int. Cl. ³) |
|---|---|---|---|
| A | JOURNAL OF APPLIED CHEMISTRY, 2nd July 1952, pages 381-390, London (GB); G.H.WHITING: "A physical method of analysing sulphur dichloride". *Page 383, lines 8-34; figure 2* | 1,3 | |
| A | JOURNAL OF SCIENTIFIC INSTRUMENTS, vol. 43, no. 10, 1966, pages 723-725, London (GB); V.I.LITTLE et al.: "A magnetic total immersion hydrometer for use in dilute electrolyte solutions". | | |

TECHNICAL FIELDS SEARCHED (Int. Cl. ³)

The present search report has been drawn up for all claims

| Place of search | Date of completion of the search | Examiner |
|---|---|---|
| THE HAGUE | 11-11-1982 | ANTHONY R.G. |